# EUROPÄISCHE PATENTSCHRIFT

(11) **EP 2 913 904 B1**
(45) Veröffentlichungstag und Bekanntmachung des Hinweises auf die Patenterteilung: **03.06.2020**
(21) Anmeldenummer: 15156248.5
(22) Anmeldetag: 24.02.2015
(51) Int. Cl.: H02G 3/14, H02G 3/18, H02G 9/10

(54) **Unterflurkassette und Verfahren zum Einbauen einer Unterflurkassette**
Under floor box, and method for installing an under floor box
Cassette souterraine et procédé de montage d'une cassette souterraine

(30) Priorität: 27.02.2014 DE 102014203622
(43) Veröffentlichungstag der Anmeldung: 02.09.2015
(73) Patentinhaber: OBO Bettermann GmbH & Co. KG, 58710 Menden (DE)
(72) Erfinder: Raschke, Jörg, 51674 Wiehl (DE); Hütt, Christoph, 51645 Gummersbach (DE)
(74) Vertreter: Patentanwälte Ruff, Wilhelm, Beier, Dauster & Partner mbB

(56) Entgegenhaltungen:
- EP-A1- 1 253 691
- WO-A1-2013/125862
- DE-A1- 2 106 482
- DE-A1- 19 639 521
- DE-A1-102008 053 779
- DE-B3-102008 037 518
- DE-U- 1 963 486
- DE-U1- 9 309 502
- DE-U1- 29 718 202
- GB-A- 2 248 866

## Beschreibung

Die Erfindung betrifft eine Unterflurkassette für überschleifbare Estriche zum Einbau von elektrischen Installationsgeräten mit einem um eine Zugangsöffnung umlaufenden Kassettenrahmen, wobei eine Oberseite des Kassettenrahmens für eine im Wesentlichen bündige Anordnung zu der Oberseite eines fertig geschliffenen Estrichs vorgesehen ist.

Mit der Erfindung soll eine Unterflurkassette und ein Verfahren zum Einbauen einer Unterflurkassette verbessert werden.

Erfindungsgemäß ist hierzu eine Unterflurkassette mit den Merkmalen von Anspruch 1 sowie ein Verfahren mit den Merkmalen von Anspruch 6 vorgesehen. Zweckmäßige Weiterbildungen der Erfindung sind in den Unteransprüchen angegeben.

Problematisch beim Einbauen von Unterflurkassetten in überschleifbare Estriche ist bisher, dass zum einen aus ästhetischen Gründen eine Dämmschicht rund um den Kassettenschutzrahmen vermieden werden soll, so dass der Estrich unmittelbar an der Außenseite des Kassettenrahmens anliegt. Beim Überschleifen oder Abschleifen des Estrichs muss infolgedessen bis unmittelbar an den Kassettenrahmen heran geschliffen werden. Kommt dabei die Schleifmaschine in Berührung mit dem üblicherweise aus Metall, insbesondere Edelstahl, bestehenden Kassettenschutzrahmen, werden zumindest die Schleifmittel der Schleifmaschine zerstört. Dies kann sogar zu einer Zerstörung der bereits annähernd fertig geschliffenen Estrichoberfläche führen. Im Unterschied zum Einbau von Unterflurkassetten in Böden, die nicht überschliffen werden, müssen Unterflurkassetten in überschleifbare Estriche schon vor dem Aufbringen und Schleifen des Estrichs eingebracht werden, da eben aus ästhetischen Gründen eine Dämmschicht zwischen dem Kassettenrahmen der Unterflurkassette und der überschliffenen Estrichschicht vermieden werden soll. Wird daher Wert darauf gelegt, dass die Estrichschicht bis unmittelbar an den Kassettenrahmen heranreicht, so muss die Unterflurkassette mit dem Kassettenrahmen vor Aufbringen des Estrichs montiert werden. Relevanter Stand der Technik ist in DE 297 18 202 U1, DE 196 39 521 A1, DE 21 06 482 A1, EP 1 253 691 A1, DE 10 2008 053779 A1 zu finden. Durch das erfindungsgemäße Vorsehen eines Estrichschutzdeckels, wobei der Estrichschutzdeckel eine Abdeckplatte aufweist, die auf der Oberseite des Kassettenrahmens aufliegt und deren Außenkante im Wesentlichen bündig mit einer Außenkante der Oberseite des Kassettenrahmens abschließt, kann nun verhindert werden, dass das Schleifmittel der Schleifmaschine in Kontakt mit der Oberseite des Kassettenrahmens kommt. Stattdessen kommt das Schleifmittel lediglich in Kontakt mit der Abdeckplatte, die angeschliffen werden kann, da sie zum einen aus einem Material besteht, das das Schleifmittel der Schleifmaschine nicht zerstört und zum anderen nach dem Abschluss des Maschinenschleifprozesses entfernt wird. In überraschend einfacher Weise ist es dadurch möglich, ohne Gefahr für das Schleifmittel einer Schleifmaschine bis in den Bereich des Kassettenrahmens der Unterflurkassette zu schleifen, um eine bis unmittelbar an den Kassettenrahmen heranreichende, geschliffene Estrichoberfläche bereitzustellen. Nach dem Abnehmen des Estrichschutzdeckels kann ein eventuell noch vorhandener Absatz zwischen der Oberseite des Kassettenschutzrahmens und der daran angrenzenden Estrichschicht manuell abgetragen werden, beispielsweise abgeschliffen werden. Die Abdeckplatte wird aber zweckmäßigerweise mit einer vergleichsweise geringen Dicke von etwa 1 mm bis 2 mm ausgeführt, so dass in der Regel nach dem maschinellen Schleifvorgang lediglich ein extrem geringer Absatz von weniger als 1 mm beziehungsweise 2 mm zwischen der Oberseite des Kassettenrahmens und der Oberseite des geschliffenen Estrichs verbleibt. Eine Art von überschleifbaren Estrichen ist sogenannter Terrazzo.

In Weiterbildung der Erfindung besteht die Abdeckplatte aus Aluminium, Kunststein, überschleifbarem Estrichmaterial, Kunststoff oder Holz.

Entscheidend ist, dass die Abdeckplatte aus einem Material besteht, das das Schleifmittel der Schleifmaschine nicht zerstört. Aluminium ist dabei sehr vorteilhaft, da schon eine geringe Dicke der Abdeckplatte von etwa 1 mm bis 2 mm genügt, um einen ausreichenden Schutz der Oberseite des Kassettenrahmens sicherzustellen, und auch eine Beschädigung des Schleifmittels der Schleifmaschine nicht zu befürchten ist.

In Weiterbildung der Erfindung ist die Abdeckplatte auf einen Rahmen aufgesetzt, dessen Außenabmessungen auf die Abmessungen der Innenseite des Kassettenrahmens abgestimmt sind.

Während des Schleifvorgangs ist es sehr wichtig, dass die Abdeckplatte sich nicht oder lediglich sehr geringfügig bewegt, um nicht die überschleifbare Estrichschicht in der Umgebung des Kassettenschutzrahmens zu zerstören. Darüber hinaus soll die Abdeckschutzplatte lediglich die Oberseite des Kassettenrahmens abdecken, aber mit ihrer Außenkante bündig mit einer Außenkante der Oberseite des Kassettenrahmens abschließen, so dass keine Hinterschnitte im Estrich radial außerhalb des Kassettenrahmens entstehen. Die Abdeckschutzplatte muss somit nicht nur exakt positioniert, sondern auch gegen Verrücken gesichert sein. Dies kann in einfacher Weise dadurch geschehen, dass die Abdeckplatte auf einen Rahmen aufgesetzt ist, dessen Außenabmessungen auf die Abmessungen der Innenseite des Kassettenrahmens abgestimmt sind. Der Rahmen sitzt dadurch exakt positioniert und im Wesentlichen unbeweglich innerhalb des Kassettenrahmens und hält dadurch die Abdeckplatte sicher und unverrückbar auf der Oberseite des Kassettenrahmens.

Eine Verbesserung einer Unterflurkassette für überschleifbare Estriche wird auch durch Vorsehen einer rahmenförmigen Estrichschalung erreicht, die eine Umfangswand und wenigstens einen, im Wesentlichen senkrecht von der Umfangswand abragenden Anlageflansch aufweist, wobei die Umfangswand im montierten Zustand der Estrichschalung abschnittsweise an einer Außenseite des Kassettenrahmens anliegt und wobei der Anlageflansch an einem im montierten Zustand der Estrichschalung unteren Ende der Umfangswand angeordnet ist.

Eine solche rahmenförmige Estrichschalung ermöglicht es, eine Begrenzung der Öffnung in der Estrichschicht, in die die Unterflurkassette eingesetzt ist, zu realisieren, wobei diese Begrenzung der Öffnung unmittelbar an dem Kassettenrahmen anliegt. Zweckmäßigerweise wird unmittelbar unterhalb der Oberfläche der Estrichschicht die Estrichschicht bis an den Kassettenrahmen herangeführt. Außerhalb des Sichtbereichs und damit kurz unterhalb der Oberseite des Kassettenrahmens bildet dann die Estrichschalung die Begrenzung der Öffnung in der Estrichschicht. Die Estrichschalung verhindert dabei nicht nur, dass der beim Aufbringen flüssige Estrich in den Innenraum der Unterflurkassette hineinläuft. Die Estrichschalung ermöglicht es durch ihren wenigstens einen Anlageflansch auch, dass sich bei einer Ausdehnung oder bei einem Zusammenziehen der fertigen Estrichschicht die Unterflurkassette relativ zum Rohboden eines Gebäudes bewegen kann. Eine solche Bewegung ist die Voraussetzung dafür, dass die Estrichschicht bis unmittelbar an den Kassettenrahmen bzw. die Estrichschalung herangeführt werden kann. Denn wenn die Unterflurkassette den Bewegungen der Estrichschicht nicht folgen könnte, wären Risse in der Estrichschicht unvermeidlich. Das Vorsehen einer Estrichschalung mit einer Umfangswand und wenigstens einem, im Wesentlichen senkrecht von der Umfangswand abragenden Anlageflansch ermöglicht dadurch den Einbau der Unterflurkassette ohne umlaufende Dämmschicht in eine Estrichschicht.

In Weiterbildung der Erfindung ist die Umfangswand der Estrichschalung mit wenigstens einem Estrichanker versehen. Auf diese Weise kann die Estrichschalung zuverlässig in der Estrichschicht verankert werden.

In Weiterbildung der Erfindung ist eine Anordnung mit einer auf einem Rohboden eines Gebäudes anzubringenden Unterflurdose und einer auf oder in die Unterflurdose eingesetzten Unterflurkassette nach einem der vorstehenden Ansprüche vorgesehen. Vorteilhafterweise liegt der wenigstens eine Anlageflansch der Umfangswand der Estrichschalung auf einer Oberseite der Unterflurdose auf. Der Anlageflansch ermöglicht es dadurch, dass kein Verhaken zwischen der Estrichschalung und der Unterflurdose auftritt, sondern vielmehr die Estrichschalung auf der Oberseite der Unterflurdose gleiten kann. Eine solche Gleitbewegung ist in geringem Maße dann erforderlich, wenn die Estrichschicht "arbeitet", also sich in Folge von Feuchtigkeitsschwankungen oder Temperaturschwankungen ausdehnt oder zusammenzieht.

Das der Erfindung zugrundeliegende Problem wird auch durch ein Verfahren zum Einbauen einer erfindungsgemäßen Unterflurkassette gelöst, bei dem das Befestigen einer Unterflurdose auf einem Rohboden eines Gebäudes, das Aufsetzen oder Einsetzen einer Unterflurkassette auf bzw. in die Unterflurdose, das Verbinden der Unterflurkassette mit der Unterflurdose und/oder dem Rohboden, das Einstellen einer Oberseite des Kassettenrahmens auf eine Höhe, die der Höhe der Oberfläche eines fertig geschliffenen Estrichbodens entspricht, das Einsetzen des Estrichschutzdeckels in den Kassettenrahmen, so dass eine Oberseite des Kassettenrahmens mittels der Abdeckplatte abgedeckt ist und eine Außenseite der Abdeckplatte im Wesentlichen bündig mit einer Außenseite des Kassettenrahmens abschließt, das Einbringen einer Basisschicht auf den Rohboden bis zur Höhe einer Oberseite der Unterflurdose, das Aufbringen einer oder mehrerer Estrichschichten bis geringfügig über die Höhe der Oberseite der Abdeckplatte und das Lösen einer Verbindung zwischen der Unterflurkassette und dem Rohboden und/oder der Unterflurdose vorgesehen ist.

Bei dem erfindungsgemäßen Verfahren wird somit eine Unterflurdose unverrückbar auf einem Rohboden eines Gebäudes befestigt und eine Basisschicht, üblicherweise eine Trittschalldämmung, wird auf den Rohboden bis zur Höhe der Oberseite der Unterflurdose aufgebracht. Die Oberseite der Basisschicht bildet zusammen mit der Oberseite der Unterflurdose dadurch eine durchgehende Oberfläche, auf der sowohl die Estrichschicht als auch die Unterflurkassette geringfügige Bewegungen ausführen kann, wenn sich die Estrichschicht ausdehnt oder zusammenzieht. Durch Einsetzen eines Estrichschutzdeckels in den Kassettenrahmen, so dass eine Oberseite des Kassettenrahmens mittels der Abdeckplatte abgedeckt ist und eine Außenseite der Abdeckplatte im Wesentlichen bündig mit einer Außenseite des Kassettenrahmens abschließt, wird die Voraussetzung dafür geschaffen, die Estrichschicht bis in den Bereich der Oberseite des Kassettenrahmens zu überschleifen, ohne dass die Gefahr besteht, dass die Oberseite des Kassettenrahmens das Schleifmittel einer Schleifmaschine beschädigt. Indem erfindungsgemäß eine Verbindung zwischen der Unterflurkassette und dem Rohboden und/oder der Unterflurdose nach dem Aufbringen der Estrichschicht gelöst wird, kann sichergestellt werden, dass sich die Unterflurkassette zusammen mit der Estrichschicht relativ zum Rohboden des Gebäudes bewegen kann. Risse in der Estrichschicht in dem die Unterflurkassette umgebenden Bereich werden dadurch zuverlässig vermieden.

In Weiterbildung der Erfindung wird eine rahmenförmige Estrichschalung mit einer Umfangswand und wenigstens einem, senkrecht von der Umfangswand abragenden Anlageflansch vorgesehen, wobei die Umfangswand abschnittsweise an eine Außenseite des Kassettenrahmens angelegt und der Anlageflansch auf eine Oberseite der Unterflurdose aufgelegt wird.

Das Vorsehen einer solchen rahmenförmigen Estrichschalung schafft einen definierten Abschluss der Estrichschicht im Bereich der Estrichschalung und verhindert zum einen, dass flüssiger Estrich in den Innenraum der Unterflurkassette läuft und ermöglicht zum anderen, dass die Estrichschalung zusammen mit der Estrichschicht die Unterflurkassette bei einem Ausdehnen oder Zusammenziehen der Estrichschicht geringfügig bewegen kann. Eine solche Bewegung wird dadurch ermöglicht, dass der Anlageflansch der Estrichschalung auf einer Oberseite der Unterflurdose aufliegt.

In Weiterbildung der Erfindung ist das Auflegen einer Trennfolie auf die Basisschicht und das Anarbeiten der Trennfolie an die Estrichschalung vorgesehen.

Die Trennfolie schafft eine Trennung zwischen der gegebenenfalls aus mehreren einzelnen Schichten bestehenden Estrichschicht und der Basisschicht und ermöglicht eine Bewegung der Estrichschicht relativ zur Basisschicht. Durch Anarbeiten der Trennfolie an die Estrichschalung wird verhindert, dass flüssiger Estrich im Bereich der Estrichschalung in das Innere der Unterflurkassette oder der Unterflurdose gelangt. Unter Anarbeiten wird dabei das passgenaue Ausschneiden sowie gegebenenfalls Verbinden der Trennfolie mit der Estrichschalung, beispielsweise durch Ankleben, verstanden.

In Weiterbildung der Erfindung ist das Abnehmen des Estrichschutzdeckels mit der Abdeckplatte und, falls erforderlich, Abschleifen oder Abtragen eines an den Kassettenrahmen angrenzenden Bereichs des Estrichs bis auf die Höhe der Oberseite des Kassettenrahmens vorgesehen. Sollte nach dem Abnehmen des Estrichschutzdeckels noch ein kleiner Absatz zwischen der Oberseite des Kassettenrahmens und der geschliffenen Estrichoberfläche vorhanden sein, so kann ein solcher Absatz manuell problemlos abgetragen werden. Da die Abdeckplatte vorteilhafterweise lediglich etwa 1 mm bis 2 mm dick ist und beim Schleifen der Estrichoberfläche wenigstens teilweise abgeschliffen wird, hat ein solcher Absatz eine Höhe von weniger als 1 mm beziehungsweise 2 mm und kann dadurch problemlos von Hand oder mit leichten, unempfindlichen Maschinen abgetragen werden.

In Weiterbildung der Erfindung ist das Einstellen der Oberseite der Unterflurdose auf die Höhe der auf den Rohboden aufzutragenden Basisschicht vorgesehen.

Die Unterflurdose wird vor dem Auftragen der Basisschicht, beispielsweise einer Trittschalldämmung, auf die Höhe der aufzutragenden Basisschicht eingestellt. Wird die Basisschicht in flüssiger und aushärtender Form aufgetragen, so kann die Unterflurdose dadurch fest in der Basisschicht und auf dem Rohboden verankert werden.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. In den Zeichnungen zeigen:
- Fig. 1: eine auseinandergezogene Darstellung einer Anordnung mit einer Unterflurdose und einer erfindungsgemäßen Unterflurkassette,
- Fig. 2: eine Ansicht auf den Estrichschutzdeckel der Unterflurkassette der Fig. 1 von schräg oben, und
- Fig. 3: eine Schnittansicht einer erfindungsgemäßen Anordnung mit Unterflurdose und Unterflurkassette, wobei im rechten Bereich die Anordnung mit noch nicht fertig geschliffener Estrichoberfläche und im linken Bereich mit geschliffener Estrichoberfläche dargestellt ist.

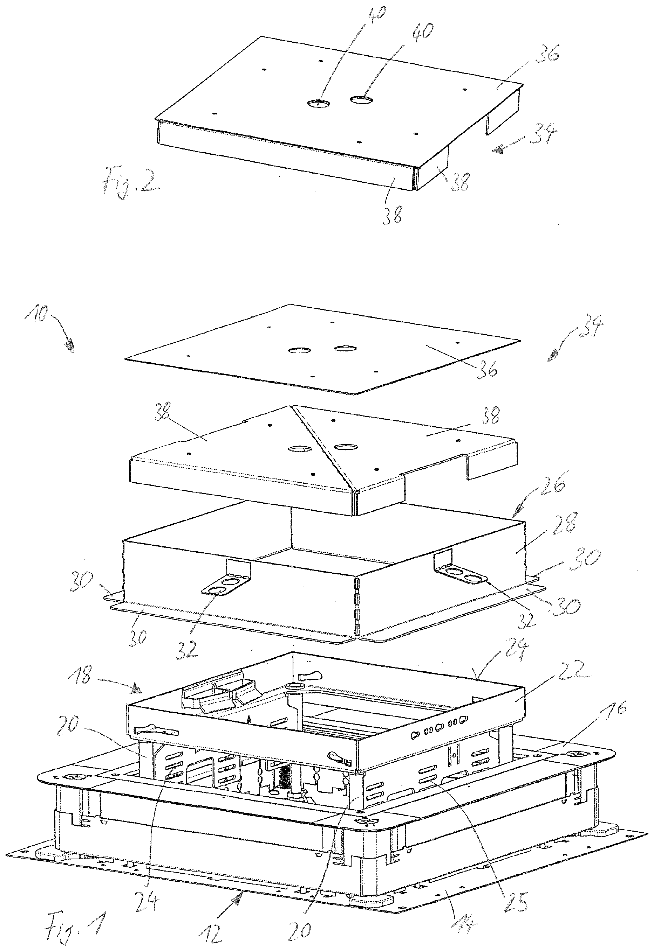

Die Darstellung der Fig. 1 zeigt eine Anordnung 10 mit einer Unterflurdose 12, die zum Aufsetzen auf einen Rohboden eines Gebäudes vorgesehen ist. Die Unterflurdose bildet einen Innenraum aus, in den nicht dargestellte Kabelkanäle münden. Die Unterflurdose 12 weist eine Bodenplatte 14 zum Befestigen an einem Rohboden und eine Oberseite 16 auf. Die Unterflurdose 12 weist eine quadratische Form auf, kann beispielsweise aber auch rechteckig oder rund ausgebildet sein.

In die Unterflurdose 12 ist eine Unterflurkassette 18 eingesetzt. Die Unterflurkassette 18 ist dabei so in den Innenraum der Unterflurdose 12 eingesetzt, dass in der Höhe einstellbare Standfüße 20 der Unterflurkassette 18 auf der Bodenplatte 14 der Unterflurdose 12 aufstehen. Die Unterflurkassette 18 weist einen Kassettenrahmen 22 auf, dessen Oberseite 24 im fertig eingebauten Zustand bündig mit einer Estrichoberfläche angeordnet sein soll.

Der Kassettenrahmen 22 ist mit einander gegenüberliegend angeordneten Rastleitern 25 versehen, in die Installationsgeräte oder Dosen zum Einbau von Installationsgeräten eingehängt werden können. In den Kassettenrahmen 22 kann ein Kassettendeckel eingesetzt werden, der in der Darstellung der Fig. 1 nicht dargestellt ist und der dann einen Schnurauslass zum Einführen eines elektrischen Anschlusskabels in den Innenraum der Unterflurkassette 18 aufweist. Der Kassettenrahmen 22 ist bei der dargestellten Ausführungsform quadratisch ausgebildet, kann aber beispielsweise auch kreisrund ausgeführt sein oder eine sonstige Form einnehmen.

Die Unterflurkassette 18 ist mit einer Estrichschalung 26 versehen, die die Form eines quadratischen Rahmens aufweist und deren Innenabmessungen auf die Außenabmessungen des Kassettenrahmens 22 abgestimmt sind. Der Rahmen kann auch rund oder rechteckig sein. Die Estrichschalung 26 kann damit von oben her über den Kassettenrahmen 22 geschoben werden, wobei dann die Innenseiten einer Umfangswand 28 der Estrichschalung 26 an den Außenseiten des Kassettenrahmens 22 anliegen. Neben der Umfangswand 28 ist die Estrichschalung mit vier Anlageflanschen 30 versehen, die rechtwinklig am unteren Ende der Umfangswand 28 abgebogen sind. Darüber hinaus ist die Estrichschalung 26 noch mit vier Estrichankern 32 versehen, die in der Mitte der vier Seiten der Umfangswand 28 angeordnet sind.

Die Estrichschalung dient dazu, auf den Kassettenrahmen 22 aufgeschoben zu werden, bis die Anlageflansche 30 mit ihrer Unterseite auf der Oberseite 16 der Unterflurdose 12 aufliegen. Eine Oberkante der Umfangswand 28 liegt dann entweder auf Höhe der Oberseite 24 des Kassettenrahmens 22 oder etwas unterhalb der Oberseite 24 des Kassettenrahmens 22. Die Estrichschalung 26 verhindert dann, dass beim Aufbringen von zunächst flüssigem Estrich dieser in den Innenraum der Unterflurkassette 18 und der Unterflurdose 12 eindringt. Durch die Estrichanker 32 ist die Estrichschalung 26 fest in der Estrichschicht verankert.

Auf den Kassettenrahmen 22 kann ein Estrichschutzdeckel 34 aufgesetzt werden, der eine Abdeckplatte 36 und zwei jeweils dreieckförmige Rahmenteile 38 aufweist. Die Abdeckplatte 36 wird mit den Rahmenteilen 38 verbunden, beispielsweise durch ein thermisches Fügeverfahren, insbesondere Punktschweißen. Die Abdeckplatte 36 besteht bei der dargestellten Ausführungsform aus Aluminium, der Rahmen aus Stahl. Die beiden dreieckförmigen Rahmenteile 38 weisen jeweils zwei im rechten Winkel zueinander angeordnete Kanten auf, deren Länge exakt auf die Innenabmessungen des Kassettenrahmens 22 abgestimmt sind. Die beiden dreieckförmigen Rahmenteile 38 werden zu einem quadratischen Rahmen zusammengesetzt, der dann im Wesentlichen spielfrei innerhalb des Kassettenrahmens 22 angeordnet werden kann.

Die Abdeckplatte 36 wiederum weist eine Kantenlänge auf, die exakt der Länge der Außenkanten des Kassettenrahmens 22 entspricht. Nach dem Aufsetzen des Estrichschutzdeckels 34 liegen somit die Außenkanten der Abdeckplatte 36 bündig zu den Außenflächen des Kassettenrahmens 22, wobei die Abdeckplatte 36 gleichzeitig die Oberseite 24 des Kassettenrahmens 22 vollständig abdeckt. Gegen eine Verschiebung der Abdeckplatte 36 ist diese durch den passgenau in den Kassettenrahmen 22 eingefügten Rahmen aus den beiden Rahmenteilen 38 gesichert.

In Fig. 2 ist der Estrichschutzdeckel 34 in einer Ansicht von schräg oben dargestellt. Die Abdeckplatte 36 ist mit zwei Grifflöchern 40 versehen, die fluchtend zu entsprechenden Grifflöchern in den Rahmenteilen 38 angeordnet sind. Die Grifflöcher 40 dienen dazu, den Estrichschutzdeckel zu ergreifen und auf den Kassettenrahmen 22 aufzusetzen oder von diesem abzuheben.

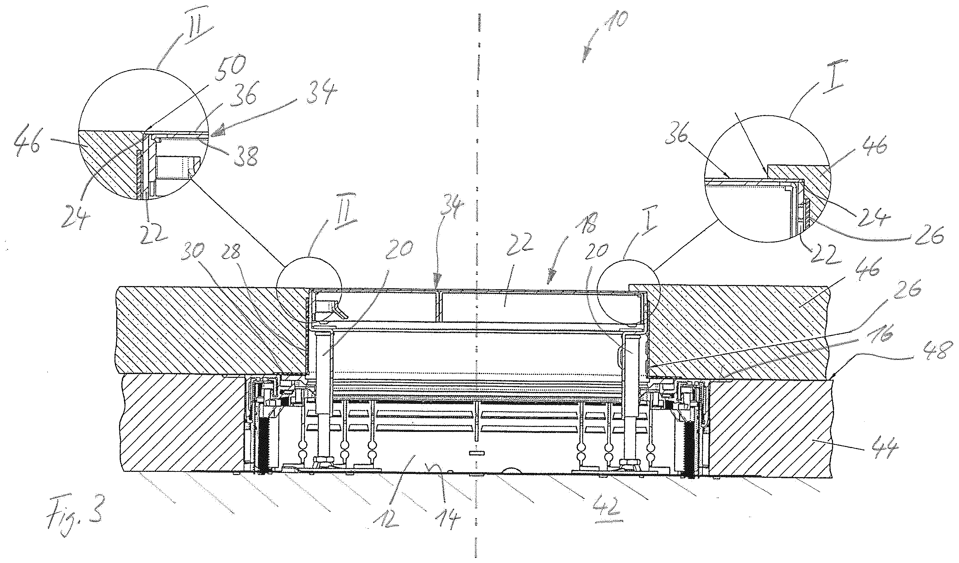

Die Darstellung der Fig. 3 zeigt die Anordnung 10 der Fig. 1 im eingebauten Zustand. Die Unterflurdose 12 ist auf einen Rohboden 42 eines Gebäudes aufgesetzt und an dem Rohboden beispielsweise durch nicht dargestellte Schrauben befestigt. Die Unterflurdose 12 ist damit gegenüber dem Rohboden 42 unbeweglich angeordnet. Die Unterflurkassette 18 steht mit ihren nivellierbaren Standfüßen 20 auf der Bodenplatte 14 der Unterflurdose 12 auf. Vor dem Aufbringen einer Trittschalldämmung 44 und einer Estrichschicht 46 wird die Unterflurkassette 18 dadurch relativ zum Rohboden 42 unverrückbar befestigt, indem die Standfüße 20 fest mit der Bodenplatte 14 der Unterflurdose 12 verbunden werden. Während des Aufbringens der Basisschicht 44, beispielsweise einer Trittschalldämmung, und der Estrichschicht 46 ist die Unterflurkassette 18 und speziell der Kassettenrahmen 22 damit gegenüber dem Rohboden 42 im Wesentlichen unbeweglich. Nach Aufbringen der Estrichschicht 46 wird die Verbindung der Standfüße 20 zur Bodenplatte 14 gelöst, so dass sich nun die Unterflurkassette 18 und speziell der Kassettenrahmen 22 zusammen mit der Estrichschicht 46 relativ zum Rohboden 42 und der Basisschicht 44 und der Unterflurdose 12 bewegen kann. Eine solche Relativbewegung zwischen der Unterflurkassette 18 und speziell dem Kassettenrahmen 22 zur Unterflurdose 12 ist dann erforderlich, wenn sich die Estrichschicht 46 durch Feuchtigkeits- oder Temperatureinflüsse ausdehnt oder zusammenzieht. Die relative Beweglichkeit von Unterflurkassette 18 bzw. Kassettenrahmen 22 und Unterflurdose 12 verhindert dann, dass Risse in der Estrichschicht 46 auftreten, vor allem in einem die Unterflurkassette 18 unmittelbar umgebenden Bereich.

Bei konventionellen Unterflurkassetten wird das Problem einer relativen Bewegung zwischen einer Estrichschicht und einer Unterflurkassette dadurch gelöst, dass zwischen einer Außenseite des Kassettenrahmens 22 und einer Estrichschicht eine elastische Dämmschicht eingebracht wird. Diese elastische Dämmschicht fängt dann Relativbewegungen zwischen der Estrichschicht und dem Kassettenrahmen auf. Bei geschliffenen Estrichböden ist es aus ästhetischen Gründen unerwünscht, eine solche elastische Dämmschicht vorzusehen. Die Estrichschicht 46 soll daher, wie in Fig. 3 gezeigt ist, bis unmittelbar an die Außenseite des Kassettenrahmens 22 heranreichen. Die erfindungsgemäße Unterflurkassette 18 ermöglicht nach Lösen der Verbindung zwischen den Standfüßen 20 und der Bodenplatte 14 der Unterflurdose 12 bzw. dem Rohboden 42 eine Bewegung des Kassettenrahmens 22 zusammen mit der Estrichschicht 46.

Die Basisschicht 44 wird bis auf die Höhe der Oberseite 16 der Unterflurdose 12 aufgebracht. Bauseitig ist in der Regel die Dicke der Basisschicht 44 vorgegeben, so dass die Oberseite 16 der Unterflurdose 12 vor dem Aufbringen der Basisschicht 44 auf die Höhe der vorgesehenen Basisschicht 44 eingestellt wird. Die Oberseite 16 der Unterflurdose 12 und die Oberseite der Basisschicht 44 bilden dann eine im Wesentlichen durchgehende Oberfläche. Auf die Basisschicht 44 wird eine Trennfolie 48 aufgelegt, die sich dann auch über die Oberseite 16 der Unterflurdose 12 erstreckt. Die Trennfolie 48 wird im Bereich der Estrichschalung 26 an diese angearbeitet. Dies erfolgt beispielsweise dadurch, dass die Trennfolie 48 ausgeschnitten und an die Anlageflansche 30 und/oder die Umfangswandung 28 der Estrichschalung 26 angeklebt wird.

Auf die Trennfolie 48 wird dann in einer oder mehreren Schichten die Estrichschicht 46 aufgebracht. Der obere Bereich der Estrichschicht 46 ist überschleifbar und beispielsweise als sogenannter Terrazzo ausgebildet. Während des Auftragens der zunächst flüssigen Estrichschicht 46 verhindern die Trennfolie 48 und vor allem die Estrichschalung 26, dass flüssiger Estrich in den Innenraum der Unterflurdose 12 oder den Innenraum der Unterflurkassette 18 eindringt.

Wie im rechten Bereich von Fig. 3 dargestellt ist, speziell in der Einzelheit I, wird die Estrichschicht bis auf eine Höhe aufgefüllt, die etwas über der Höhe der Oberseite 24 des Kassettenrahmens 22 und auch noch über der Oberseite der Abdeckplatte 36 des Estrichschutzdeckels liegt. Wie in der Einzelheit I zu erkennen ist, liegt die Estrichschalung 26 mit ihrer Innenseite an einer Außenseite des Kassettenrahmens 22 an. Eine Oberseite der Estrichschalung 26 liegt ein Stück weit unterhalb der Oberseite 24 des Kassettenrahmens 22, wobei die relative Lage von Estrichschalung 26 und Kassettenrahmen 22 von der bauseits vorgegebenen Dicke der Estrichschicht 46 abhängt.

Die Estrichschicht 46 wird mittels Schleifmaschinen nun so weit abgetragen, bis die Oberseite der Estrichschicht 46 im Wesentlichen bündig mit einer Oberseite der Abdeckplatte 36 ist. Dieser Zustand ist auf der linken Seite der Fig. 3 und vergrößert in der Einzelheit II dargestellt. In der Einzelheit II ist zu erkennen, dass eine Außenkante 50 der Abdeckplatte 36 bündig mit einer Außenfläche des Kassettenrahmens 22 angeordnet ist und die Oberseite 24 des Kassettenrahmens 22 vollständig überdeckt. Die Oberfläche der Estrichschicht 46, die abgeschliffen wurde, verläuft nun fluchtend zu einer Oberseite der Abdeckplatte 36. Während dieses Schleifvorgangs kann die Abdeckplatte 36 dabei ohne weiteres ein Stück mit abgeschliffen werden. Die Abdeckplatte 36 besteht vorzugsweise aus Aluminium und kann abgeschliffen werden, ohne dass die Schleifmittel der verwendeten Schleifmaschine Schaden leiden. Da die Außenkante 50 der Abdeckplatte 36 genau mit den Außenflächen des Kassettenrahmens 22 abschließt, entstehen in der Estrichschicht 46 keine Hinterschnitte, sondern die Estrichschicht 46 endet an der Außenfläche des Kassettenrahmens 22. Während des Schleifvorgangs wird die Abdeckplatte 36 dadurch unverrückbar auf der Oberseite 24 des Kassettenrahmens 22 gehalten, dass der Rahmen 38 des Estrichschutzdeckels in den Kassettenrahmen 22 eingepasst ist.

Wird nun der Estrichschutzdeckel 34 abgenommen, so weist die Estrichschicht 46 allenfalls einen sehr niedrigen Absatz auf, der dann in die Oberseite 24 des Kassettenrahmens 22 übergeht. Dieser sehr kleine Absatz kann dann manuell abgetragen werden. Es ist dabei zu berücksichtigen, dass die Abdeckplatte 36 vorteilhafterweise eine Dicke von etwa 1 mm aufweist. Während des Überschleifens der Estrichschicht 46 wird die Abdeckplatte 36 in ihrem Randbereich ebenfalls ein Stück weit abgetragen. Nach Abnehmen des Estrichschutzdeckels 34 beträgt die Höhe des Absatzes von der Oberseite der Estrichschicht 46 zur Oberseite 24 des Kassettenrahmens 22 somit maximal 1 mm. Dieser Absatz kann problemlos manuell oder mit leichten Maschinen abgetragen werden.

Im fertiggestellten Zustand kann sich nun die Estrichschicht 46 relativ zu der Basisschicht 44 und der Unterflurdose 12 bewegen, da zwischen der Basisschicht 44 und der Estrichschicht 46 die Trennfolie 48 angeordnet ist. Die Trennfolie 48 ist auch noch im Bereich der Oberseite 16 der Unterflurdose 12 angeordnet. Die Estrichschalung 26 ist mittels der Estrichanker 32, siehe Fig. 1, fest mit der Estrichschicht 46 verbunden. Die Estrichschalung 26 bewegt sich somit ebenfalls zusammen mit der Estrichschicht 46, wenn sich diese ausdehnt oder zusammenzieht. Durch die Anlageflansche 30 liegt die Estrichschalung 26 auf der Oberseite 16 der Unterflurdose 12 auf und kann dadurch problemlos relativ zu der Unterflurdose 12 verschoben werden. Die Umfangswand 28 der Estrichschalung liegt an der Außenseite des Kassettenrahmens 22 an und sorgt dadurch für eine flächige Übertragung von Kräften bei einer Bewegung der Estrichschicht 46. Durch Vorsehen der Estrichschalung 26 ist es somit ausgeschlossen, dass zwischen der Estrichschicht 46 und dem Kassettenrahmen 22 so hohe Kräfte auftreten, dass die Estrichschicht 46 am Übergang zwischen Estrichschicht 46 und Kassettenrahmen 22 beschädigt werden könnte.

Wesentlich ist hierbei, dass nach dem Aufbringen der Estrichschicht 46 die Standfüße der Unterflurkassette 18 vom Rohboden 42 bzw. von der Bodenplatte 14 der Unterflurdose 12 gelöst werden oder die Standfüße so flexibel sind, so dass sich der Kassettenrahmen 22 relativ zum Rohboden 42 und relativ zur Unterflurdose 12 bewegen kann.

Nach Abnehmen des Estrichschutzdeckels 34 kann ein herkömmlicher Kassettendeckel in die Unterflurkassette 18 eingesetzt werden. Ein solcher herkömmlicher Kassettendeckel kann ebenfalls mit einer überschliffenen Estrichschicht versehen sein.

## Patentansprüche

1. Unterflurkassette für überschleifbare Estriche zum Einbau von elektrischen Installationsgeräten mit einem um eine Zugangsöffnung umlaufenden Kassettenrahmen (22), wobei eine Oberseite (24) des Kassettenrahmens (22) für eine bündige Anordnung zu der Oberseite eines fertig geschliffenen Estrichs vorgesehen ist, wobei ein Estrichschutzdeckel (34) eine Abdeckplatte (36) aufweist, die auf der Oberseite (24) des Kassettenrahmens (22) aufliegt, **gekennzeichnet dadurch, dass** eine Außenkante (50) der Abdeckplatte (36) bündig mit einer Außenkante der Oberseite (24) des Kassettenrahmens (22) abschließt, mit einer rahmenförmigen Estrichschalung (26), die eine Umfangswand (28) und wenigstens einen, senkrecht von der Umfangswand (28) abragenden Anlageflansch (30) aufweist, wobei die Umfangswand (28) im montierten Zustand der Estrichschalung (26) abschnittsweise an einer Außenseite des Kassettenrahmens (22) anliegt und wobei der Anlageflansch (30) an einem im montierten Zustand der Estrichschalung (26) unteren Ende der Umfangswand (28) angeordnet ist, wobei eine Oberseite der Estrichschalung (26) unterhalb der Oberseite (24) des Kassettenrahmens (22) liegt, wobei die Umfangswand (28) der Estrichschalung (26) mit wenigstens einem Estrichanker (32) versehen ist.

2. Unterflurkassette nach Anspruch 1, **dadurch gekennzeichnet, dass** die Abdeckplatte (36) aus Aluminium, Kunststein, überschleifbarem Estrichmaterial, Kunststoff oder Holz besteht.

3. Unterflurkassette nach Anspruch 1 oder 2, **dadurch gekennzeichnet, dass** die Abdeckplatte (36) auf einen Rahmen (38) aufgesetzt ist, dessen Außenabmessungen auf die Abmessungen der Innenseite des Kassettenrahmens (22) abgestimmt sind.

4. Anordnung mit einer auf einem Rohboden (42) eines Gebäudes anzubringenden Unterflurdose (12) und einer auf oder in die Unterflurdose (12) eingesetzten Unterflurkassette (18) nach einem der vorstehenden Ansprüche.

5. Anordnung nach Anspruch 4, **dadurch gekennzeichnet, dass** der wenigstens eine Anlageflansch (30) der Estrichschalung (26) auf einer Oberseite (16) der Unterflurdose (12) aufliegt.

6. Verfahren zum Einbauen einer Unterflurkassette nach wenigstens einem der vorstehenden Ansprüche, wobei das Befestigen einer Unterflurdose (12) auf einem Rohboden (42) eines Gebäudes, das Aufsetzen oder Einsetzen einer Unterflurkassette (18) auf beziehungsweise in die Unterflurdose (12) und das Verbinden der Unterflurkassette mit der Unterflurdose (12) und/oder dem Rohboden (42), und das Einstellen einer Oberseite (24) des Kassettenrahmens (22) auf eine Höhe, die der Höhe der Oberfläche einer fertig geschliffenen Estrichschicht entspricht, vorgesehen ist, **gekennzeichnet durch** Einsetzen des Estrichschutzdeckels (34) in den Kassettenrahmen (22), so dass eine Oberseite (24) des Kassettenrahmens (22) mittels der Abdeckplatte (36) abgedeckt ist und eine Außenseite der Abdeckplatte (36 bündig mit einer Außenseite des Kassettenrahmens (22) abschließt, Ausbringen einer Basisschicht (44) auf den Rohboden (42) bis zur Höhe einer Oberseite (16) der Unterflurdose (12), Aufbringen einer oder mehrerer Estrichschichten (46) bis geringfügig über die Höhe der Oberseite der Abdeckplatte (36) und Lösen einer Verbindung zwischen der Unterflurkassette (18) und dem Rohboden (42) und/oder der Unterflurdose (12), **gekennzeichnet durch** Vorsehen einer rahmenförmigen Estrichschalung (26) mit einer Umfangswand (28) und wenigstens einem, senkrecht von der Umfangswand (28) abragenden Anlagenflansch (30), wobei die Umfangswand (28) abschnittsweise an eine Außenseite des Kassettenrahmens (22) angelegt und der Anlageflansch (30) auf eine Oberseite der Unterflurdose (12) aufgelegt ist und weiter **gekennzeichnet durch** Auflegen einer Trennfolie (48) auf die Basisschicht (44) und Anarbeiten der Trennfolie (48) an die Estrichschalung (26).

7. Verfahren nach Anspruch 6, **gekennzeichnet durch** Abschleifen der Estrichschicht (46) bis die Oberfläche der Estrichschicht (46) im Wesentlichen fluchtend zur Oberseite (24) der Abdeckplatte (36) angeordnet ist.

8. Verfahren nach Anspruch 7, **gekennzeichnet durch** Abnehmen des Estrichschutzdeckels (34) mit der Abdeckplatte (36) und, falls erforderlich, Abschleifen oder Abtragen eines an den Kassettenrahmen (22) angrenzenden Bereichs der Estrichschicht (46) bis auf die Höhe der Oberseite (24) des Kassettenrahmens (22).

9. Verfahren nach einem der Ansprüche 6 bis 8, **gekennzeichnet durch** Einstellen der Oberseite (16) der Unterflurdose (12) auf die Höhe einer auf den Rohboden (42) aufzutragenden Basisschicht (44).

## Claims

1. Under-floor cassette for grindable floor screeds for installing electric installation devices, comprising a cassette frame (22) encircling an access opening, wherein an upper side (24) of the cassette frame (22) is provided for an arrangement flush to the upper side of a finished grinded floor screed, wherein a floor screed protective cover (34) has a cover plate (36) which rests on the upper side (24) of the cassette frame (22), **characterized in that** an outer edge (50) of the cover plate (36) ends flush with an outer edge of the upper side (24) of the cassette frame (22), with a frame-shaped floor screed casing (26) including a peripheral wall (28) and at least one attachment flange (30) projecting perpendicularly from the peripheral wall (28), wherein the peripheral wall (28) in the mounted condition of the floor screed casing (26) rests in sections on an outer side of the cassette frame (22), and wherein the attachment flange (30) is disposed on a lower end of the peripheral wall (28) in the mounted condition of the floor screed casing (26), wherein an upper side of the floor screed casing (26) is located below the upper side (24) of the cassette frame (22), wherein the peripheral wall (28) of the floor screed casing (26) is provided with at least one floor screed anchor (32).

2. Under-floor cassette according to claim 1, **characterized in that** the cover plate (36) is made of aluminum, artificial stone, grindable floor screed material, synthetic material or wood.

3. Under-floor cassette according to claim 1 or 2, **characterized in that** the cover plate (36) is placed on a frame (38), with the outer dimensions of the frame matched to the dimensions of the inner side of the cassette frame (22).

4. Arrangement with an under-floor box (12) to be installed on an unfinished floor (42) of a building and an under-floor cassette (18) according to any of the preceding claims placed on or inserted into the under-floor box (12).

5. Arrangement according to claim 4, **characterized in that** the at least one attachment flange (30) of the floor screed casing (26) rests on an upper side (16) of the under-floor box (12).

6. Method for installing an under-floor cassette according to at least one of the preceding claims, wherein fixing of an under-floor box (12) on an unfinished floor (42) of a building, placing on or inserting of an under-floor cassette (18) onto or into the under-floor box (12) and connecting the under-floor cassette to the under-floor box (12) and/or the unfinished floor (42), and adjusting an upper side (24) of the cassette frame (22) to a height level which corresponds to the height level of the surface of a finished grinded floor screed layer are provided, **characterized by** inserting the floor screed protective cover (34) into the cassette frame (22) such that an upper side (24) of the cassette frame (22) is covered by the cover plate (36) and an outer side of the cover plate (36) ends flush with an outer side of the cassette frame (22), applying a base layer (44) on the unfinished floor (42) up to the height level of an upper side (16) of the under-floor box (12), applying one or more floor screed layers (46) up to slightly higher than the height level of the upper side of the cover plate (36) and disconnecting a connection between the under-floor cassette (18) and the unfinished floor (42) and/or the under-floor box (12), **characterized by** providing a frame-shaped floor screed casing (26) including a peripheral wall (28) and at least one attachment flange (30) projecting perpendicularly from the peripheral wall (28), wherein the peripheral wall (28) rests in sections on an outer side of the cassette frame (22) and the attachment flange (30) is placed on an upper side of the under-floor box (12), and further **characterized by** applying a separating foil (48) on the base layer (44) and joining the separating foil (48) to the floor screed casing (26).

7. Method according to claim 6, **characterized by** grinding off the floor screed layer (46) until the surface of the floor screed layer (46) is essentially flush with the upper side (24) of the cover plate (36).

8. Method according to claim 7, **characterized by** taking off the floor screed protective cover (34) with the cover plate (36) and, if required, grinding off or removing an area of the floor screed layer (46) adjacent to the cassette frame (22) up to the height level of the upper side (24) of the cassette frame (22).

9. Method according to any of the claims 6 to 8, **characterized by** adjusting the upper side (16) of the under-floor box (12) to the height level of a base layer (44) to be applied to the unfinished floor (42).

## Revendications

1. Cassette encastrable au sol pour chapes ponçables destinée au montage d'appareillages d'installation électriques, comprenant un cadre de cassette (22) périphérique autour d'une ouverture d'accès, un côté supérieur (24) du cadre de cassette (22) étant conçu pour une disposition à fleur par rapport à la face supérieure d'une chape poncée finie, un couvercle de protection de chape (34) possédant une plaque de recouvrement (36) qui repose sur le côté supérieur (24) du cadre de cassette (22), **caractérisé en ce qu'**un bord extérieur (50) de la plaque de recouvrement (36) se termine à fleur avec un bord extérieur du côté supérieur (24) du cadre de cassette (22), avec un coffrage de chape (26) qui possède une paroi périphérique (28) et au moins une bride d'appui (30) qui fait saillie verticalement depuis la paroi périphérique (28), la paroi périphérique (28), dans l'état monté du coffrage de chape (26), reposant par certaines portions contre un côté extérieur du cadre de cassette (22) et la bride d'appui (30) étant disposée au niveau d'une extrémité de la paroi périphérique (28) qui est inférieure dans l'état monté du coffrage de chape (26), un côté supérieur du coffrage de chape (26) se trouvant au-dessous du côté supérieur (24) du cadre de cassette (22), la paroi périphérique (28) du coffrage de chape (26) étant pourvue d'au moins un élément d'ancrage de chape (32).

2. Cassette encastrable au sol selon la revendication 1, **caractérisée en ce que** la plaque de recouvrement (36) est constituée d'aluminium, de pierre artificielle, de matériau de chape ponçable, de matière plastique ou de bois.

3. Cassette encastrable au sol selon la revendication 1 ou 2, **caractérisée en ce que** la plaque de recouvrement (36) est déposée sur un cadre (38) dont les dimensions extérieures sont accordées sur les dimensions du côté intérieur du cadre de cassette (22).

4. Arrangement comprenant une boîte encastrable au sol (12) à poser sur un sol brut (42) d'un bâtiment et une cassette encastrable au sol (18) selon l'une des revendications précédentes posée sur ou insérée dans la boîte encastrable au sol (12).

5. Arrangement selon la revendication 4, **caractérisé en ce que** l'au moins une bride d'appui (30) du coffrage de chape (26) repose sur un côté supérieur (16) de la boîte encastrable au sol (12).

6. Procédé de montage d'une cassette encastrable au sol selon au moins l'une des revendications précédentes, la fixation d'une boîte encastrable au sol (12) sur un sol brut (42) d'un bâtiment, la pose ou l'insertion d'une cassette encastrable au sol (18) sur ou dans la boîte encastrable au sol (12) et la liaison de la cassette encastrable au sol avec la boîte encastrable au sol (12) et/ou le sol brut (42), et le réglage d'un côté supérieur (24) du cadre de cassette (22) à une hauteur qui correspond à la hauteur de la surface d'une couche de chape poncée finie étant prévus, **caractérisé par** l'insertion du couvercle de protection de chape (34) dans le cadre de cassette (22) de sorte que le côté supérieur (24) du cadre de cassette (22) est recouvert au moyen de la plaque de recouvrement (36) et un côté extérieur de la plaque de recouvrement (36) se termine à fleur avec un côté extérieur du cadre de cassette (22), épandage d'une couche de base (44) sur le sol brut (42) jusqu'à la hauteur d'un côté supérieur (16) de la boîte encastrable au sol (12), application d'une ou plusieurs couches de chape (46) jusqu'à légèrement au-dessus de la hauteur du côté supérieur de la plaque de recouvrement (36) et détachement d'une liaison entre la cassette encastrable au sol (18) et le sol brut (42) et/ou la boîte encastrable au sol (12), **caractérisé par** la fourniture d'un coffrage de chape (26) en forme de cadre comprenant une paroi périphérique (28) et au moins une bride d'appui (30) qui fait saillie verticalement depuis la paroi périphérique (28), la paroi périphérique (28) étant en appui par certaines portions contre un côté extérieur du cadre de cassette (22) et la bride d'appui (30) étant déposée sur un côté supérieur de la boîte encastrable au sol (12) et en plus **caractérisé par** l'application d'un film de séparation (48) sur la couche de base (44) et l'ajustement du film de séparation (48) contre le coffrage de chape (26).

7. Procédé selon la revendication 6, **caractérisé par** le ponçage de la couche de chape (46) jusqu'à ce que la surface de la couche de chape (46) soit disposée sensiblement à fleur avec le côté supérieur (24) de la plaque de recouvrement (36).

8. Procédé selon la revendication 7, **caractérisé par** le retrait du couvercle de protection de chape (34) avec la plaque de recouvrement (36) et, si nécessaire, le ponçage ou l'enlèvement d'une zone de la couche de chape (46) adjacente au cadre de cassette (22) jusqu'à la hauteur du côté supérieur (24) du cadre de cassette (22).

9. Procédé selon l'une des revendications 6 à 8, **caractérisé par** le réglage du côté supérieur (16) de la boîte encastrable au sol (12) à la hauteur d'une couche de base (44) à appliquer sur le sol brut (42).
